# EUROPÄISCHE PATENTSCHRIFT

(11) **EP 1 342 893 B1**
(45) Veröffentlichungstag und Bekanntmachung des Hinweises auf die Patenterteilung: **26.05.2010**
(21) Anmeldenummer: 03005091.8
(22) Anmeldetag: 07.03.2003
(51) Int. Cl.: F02B 29/04, F02B 37/00, F01P 9/06

(54) **Vorrichtung zur Kühlung von Ladeluft und Verfahren zum Betreiben einer derartigen Vorrichtung**
Apparatus for cooling charge air and method of operating such an apparatus
Dispositif de refroidissement de l'air suralimenté et procédé pour faire fonctionner un tel dispositif

(30) Priorität: 19.11.2002 DE 10254016; 08.03.2002 DE 10210132
(43) Veröffentlichungstag der Anmeldung: 10.09.2003
(73) Patentinhaber: Behr GmbH & Co. KG, 70469 Stuttgart (DE)
(72) Erfinder: Burk, Roland, Dipl.-Phys., 70469 Stuttgart (DE); Geskes, Peter, Dr., 70469 Stuttgart (DE); Heckenberger, Thomas, Dr., 70771 Leinfelden-Echterdingen (DE)
(74) Vertreter: Grauel, Andreas

(56) Entgegenhaltungen:
- DE-A1- 19 834 135
- GB-A- 2 129 055
- US-A- 4 485 624
- US-A- 5 269 143
- US-A- 5 394 854
- US-A- 6 006 540

## Beschreibung

Die Erfindung betrifft eine Vorrichtung zur Kühlung von Ladeluft bei einem Kraftfahrzeug mit einem Turbolader gemäß dem Oberbegriff des Anspruchs 1 sowie ein Verfahren zum Betreiben einer Vorrichtung gemäß dem Oberbegriff des Anspruches 21.

Gemäß dem Stand der Technik werden zur Leistungssteigerung von Motoren Turbolader zur Verdichtung der Luft verwendet. Hierbei erfolgt jedoch eine Erwärmung der Luft, im Folgenden als Ladeluft bezeichnet, in Folge der Kompression im Turbolader auf Temperaturen von über 150°C. Um die Luftdichte weiter zu erhöhen und die Verbrennungsspitzentemperaturen zu begrenzen, wird die Ladeluft in einem Wärmetauscher gekühlt, der vorne im Kühlmodul angeordnet ist. Die Ladeluft strömt dabei durch einen Wärmetauscher, der von Umgebungsluft durchströmt und damit gekühlt wird. Dadurch ist eine Abkühlung der Ladeluft auf eine Temperatur möglich, die etwa 20-90 K über der Temperatur der Umgebungsluft liegt.

Ferner ist bekannt, dass die Kühlung der Ladeluft über einen Kühlmittelkreislauf erfolgt. Hierbei strömt die Ladeluft motornah durch einen kühlmittelbeaufschlagten Luftkühler, in dem die Wärme an das Kühlmittel übertragen wird. Das Kühlmittel wird durch einen Luft-/Kühlmittelkühler gepumpt, der im Kühlmodul vor oder neben dem Kühlmittelkühler des Fahrzeuges angeordnet ist. Dort wird die Wärme an die Umgebungsluft abgegeben, wodurch im Wesentlichen lange, voluminöse Ladeluftleitungen vermieden werden.

Entsprechende Vorrichtungen sind z.B. aus US 5 269 143 A und US 6 006 540 A bekannt.

Es ist Aufgabe der Erfindung, eine Vorrichtung der eingangs genannten Art zu verbessern.

Diese Aufgabe wird gelöst durch eine Vorrichtung mit den Merkmalen des Anspruchs 1.

Erfindungsgemäß wird bei einem Kreislauf oder einer Vorrichtung, d.h. einem Kühlmittel- und/einem Kältemittelkreislauf, zur Kühlung von Ladeluft bei einem Kraftfahrzeug mit einem Turbolader eine zweite Kühlstufe vorgesehen. Durch eine derartige zweite Kühlstufe ist eine effektivere Kühlung der Ladeluft möglich. Die auf diese Weise stärker abgekühlte Ladeluft führt zu einer Leistungssteigerung des Motors, wobei Überschluss-Kälteleistung der Klimaanlage verwendet wird. Die Absenkung der Ladelufttemperatur auf eine Temperatur unter der Umgebungslufttemperatur führt zu einer verringerten NOx-Bildung, da die Verbrennungstemperatur abgesenkt werden kann, so dass sich auch Vorteile in Hinblick auf die Umwelt ergeben. Als Nebeneffekt kann die Wärme der Ladeluft bspw. zur Beheizung des Fahrzeuginnenraumes verwendet werden. Durch die beiden Kühlstufen erhöht sich der exergetische Gesamtwirkungsgrad infolge einer Einsparung von Primärenergie auf Grund der geringeren Pump- und Lüfterleistungen zur Belüftung des konventionellen Ladeluftkühlers.

Es wird ein Kühlmittelkreislauf mit einem Kühler zur Kühlung von Ladeluft vorgesehen bei dem der Kühlmittelkreislauf einen Verdampfer aufweist, welcher Teil eines Kältemittelkreislaufs ist. Der Kältemittelkreislauf ist Teil einer Klimaanlage. Dabei wird das Kühlmittel über den Kältemittelkreislauf auf ein niedriges Temperaturniveau gebracht. Der zusätzliche Verdampfer kann auf relativ einfache Weise in bestehende Kreisläufe eingebaut werden.

Vorzugsweise ist vor dem Verdampfer ein Kühler, worin Kühlmittel von der Umgebungsluft (vor-)gekühlt wird, und nach dem Verdampfer der Kühler für die Ladeluft angeordnet.

Der Verdampfer ist in einem Bypass des Kältemittelkreislaufs angeordnet, welcher parallel zum Verdampfer der Klimaanlage angeordnet ist. Der Bypass weist vorzugsweise ein Expansionsventil auf, ebenso wie der hierzu parallele Teil der Hauptleitung.

Gemäß einer bevorzugten Ausführungsform ist im Kühlmittelkreislauf ein Bevorratungsbehälter angeordnet, in dem abgekühltes Kühlmittel gespeichert werden kann, um instationäre Brems- und Beschleunigungsvorgänge auszugleichen, da der Kältemittel-Kompressor mit der Motordrehzahl gekoppelt ist.

Gemäß einer weiteren bevorzugten Ausführungsform ist im Kühlmittelkreislauf ein Bypass vorgesehen, vorzugsweise in Verbindung mit einer zweistufigen Kühlung der Ladeluft, wodurch bspw. im Winter, wenn keine zusätzliche Kühlung des Kühlmittels durch das Kältemittel erforderlich ist, dieser Teil des Kühlmittelkreislaufs abgetrennt werden kann. In Verbindung mit der zweistufigen Kühlung der Ladeluft gibt vorzugsweise der zweite Kühlmittel/Ladeluft-Kühler eine Leistung ab, die 0 bis 40% der Gesamtleistung beider Kühler entspricht.

Eine zweistufige Kühlung der Ladeluft kann auch durch einen herkömmlichen Luftkühler und einen nachgeschalteten zweiten Kühler erfolgen, welcher Teil des Kühlmittelkreislaufs oder ggf. auch des Kältemittelkreislaufs ist.

Dabei ist der zweite Kühler, d.h. die zweite Kühlstufe vorzugsweise in die erste Kühlstufe und/oder in die Motoransaugung integriert. Dies ermöglicht unter anderem eine einfache und schnelle Montage Ferner lässt sich durch den kompakten Aufbau die Leistungsdichte des Ladeluft-Kühlsystems erhöhen.

Vorzugsweise erfolgt eine Regelung der Ladeluft-Kühlung, insbesondere anhand der Ladeluft-Austrittstemperatur, durch ein Stellorgan, bspw. einer oder mehrerer Bypass-Luftklappen, die am Verzweigungspunkt und/oder Zusammenführungspunkt eines Bypass-Kanals zur zweiten Kühlstufe angeordnet sind. Hierbei kann durch eine Stellbewegung des Stellorgans auf sehr schnelle Weise eine niedrigere Ladeluft-Eintrittstemperatur erhalten werden. Die Anpassung des Saugdrucks und die Rückregelung des Stellorgans erfolgt, da er länger dauert, anschließend. Dies ermöglicht eine verbesserte Regelung der Verbrennungs- bzw. Abgastemperatur. Zudem lässt sich Kraftstoff einsparen und die Emission reduzieren.

Im Folgenden wird die Erfindung anhand einiger Ausführungsbeispiele unter Bezugnahme auf die Zeichnung im Einzelnen erläutert. In der Zeichnung zeigen:
- Fig. 1: einen Kreislauf zur Ladeluftkühlung gemäß dem ersten Ausführungsbeispiel;
- Fig. 2: einen Kreislauf zur Ladeluftkühlung gemäß dem zweiten Ausführungsbeispiel;
- Fig. 3: einen Kreislauf zur Ladeluftkühlung gemäß dem dritten Ausführungsbeispiel;
- Fig. 4: einen Kreislauf zur Ladeluftkühlung gemäß dem vierten Ausführungsbeispiel;
- Fig. 5: einen Kreislauf zur Ladeluftkühlung gemäß dem fünften, nicht erfindungsgemäßen Ausführungsbeispiel;
- Fig. 6: einen Kreislauf zur Ladeluftkühlung gemäß dem sechsten, nicht erfindungsgemäßen Ausführungsbeispiel;
- Fig. 7: einen Ausschnitt eines Kreislaufs zur Ladeluftkühlung gemäß dem siebten, nicht erfindungsgemäßen Ausführungsbeispiel;
- Fig. 8: eine erste Ausführungsform betreffend die Ausgestaltung der Wärmetauscher der ersten und zweiten Kühlstufe, insbesondere gemäß dem sechsten Ausführungsbeispiel;
- Fig. 9: eine zweite Ausführungsform betreffend die Ausgestaltung der Wärmetauscher der ersten und zweiten Kühlstufe;
- Fig. 10: eine dritte Ausführungsform betreffend die Ausgestaltung der Wärmetauscher der ersten und zweiten Kühlstufe in explosionsartiger Darstellung;
- Fig. 11: eine vierte Ausführungsform mit direkter Integration der zweiten Kühlstufe in die Motoransaugung;
- Fig. 12a und b: zwei Varianten von Bypass-Kanälen für die Ladeluftführung;
- Fig. 13: den Kühlmittelkreislauf von Fig. 6 in einer detaillierteren Darstellung;
- Fig. 14: eine Detailansicht der Kanäle der Ladeluft zum Motor; und
- Fig. 15: ein Flussdiagramm zur Darstellung einer Regelung einer Bypass-Luftklappe der zweiten Kühlstufe und einer Regelung des Saugdruckes eines extern angesteuerten und intern geregelten Kompressors.

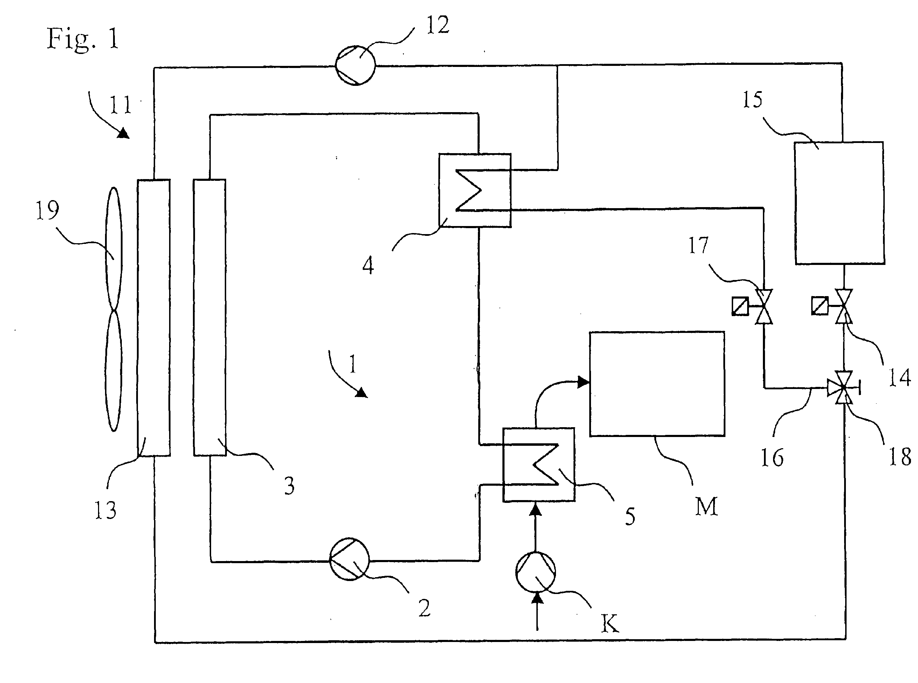

Fig. 1 zeigt ein erstes Ausführungsbeispiel, bei dem ein Kühlmittelkreislauf 1 mit einem Kühlmittel als eine Vorrichtung zur Kühlung von Ladeluft bei einem Kraftfahrzeug mit einem Turbolader vorgesehen ist, welcher eine das Kühlmittel im Kühlmittelkreislauf 1 antreibende Kühlmittel-Pumpe 2, einen Kühler 3, einen Kühlmittel/Kältemittel-Verdampfer 4 und einen Kühlmittel/Ladeluft-Kühler 5 aufweist, wobei das Kühlmittel die einzelnen Stationen in der genannten Reihenfolge durchströmt. Hierbei wird das Kühlmittel im Kühler 3 von der Umgebungsluft gekühlt, bevor es im Kühlmittel/Kältemittel-Verdampfer 4 noch weiter abgekühlt wird, vorzugsweise zwischen 5 und 25°C, um im Kühlmittel/Ladeluft-Kühler 5 der mit Hilfe eines Kompressors K komprimierten Ladeluft Wärme zu entziehen, bevor diese dem Motor M zugeführt wird.

Ferner ist im System oder in der Vorrichtung ein Kältemittelkreislauf 11 vorgesehen, welcher seinerseits einen das Kältemittel im Kältemittelkreislauf 11 antreibenden Kältemittel-Kompressor 12, einen Kondensator 13, welcher mit dem Kühler 3 des Kühlmittelkreislaufs 1 zusammenwirkt, einem Expansionsventil 14 und einem Klima-Verdampfer 15 aufweist. Ferner ist ein Bypass 16 vorgesehen, welcher ein zweites Expansionsventil 17 aufweist und durch den Kühlmittel/Kältemittel-Verdampfer 4 zurück zum Kältemittel-Kompressor 12 führt. Die Zuschaltung des Kühlmittel/Kältemittel-Verdampfers 4 und/oder des Klima-Verdampfers 15 erfolgt mittels eines an der Abzweigung des Bypasses 16 angeordneten Ventils 18. Das Ventil 18 kann einen der beiden oder beide Stränge zu- oder abschalten. Alternativ können auch vor oder nach den beiden Expansionsventilen 14, 17 ansteuerbare Ventile vorgesehen sein, um einen der beiden parallel geschalteten Verdampfer zu- oder abschalten bzw. drosseln zu können. Gemäß dem vorliegenden Ausführungsbeispiel strömt das Kältemittel ausgehend von dem Kältemittel-Kompressor 12 zum Kondensator 13, wo das Kältemittel mit Hilfe der Umgebungsluft abgekühlt und konditioniert wird. Anschließend gelangt das Kältemittel zum Ventil 18 von dem es aus zum ersten Expansionsventil 14 und zum Klima-Verdampfer 15 oder, je nach Stellung des Ventils 18, über den Bypass 16, d.h. das zweite Expansionsventil 17 und den Kühlmittel/Kältemittel-Verdampfer 4, gelangt und der Bypass 16 wieder der Hauptleitung zugeführt wird.

Die beiden Verdampfer 4 und 5 sind parallel zueinander angeordnet und lassen sich einzeln zu- oder abschalten. Ferner lässt sich die eingespritzte Kältemittelmenge im Kältemittelkreislauf 11 über die Expansionsventile 14 und 17 regeln. Anstelle von Expansionsventilen können bspw. auch Festdrosseln (orifice tubes) oder thermostatische Expansionsventile eingesetzt werden. Der Kondensator 13 und der Kühler 3 werden über einen Lüfter 19 von Luft durchströmt.

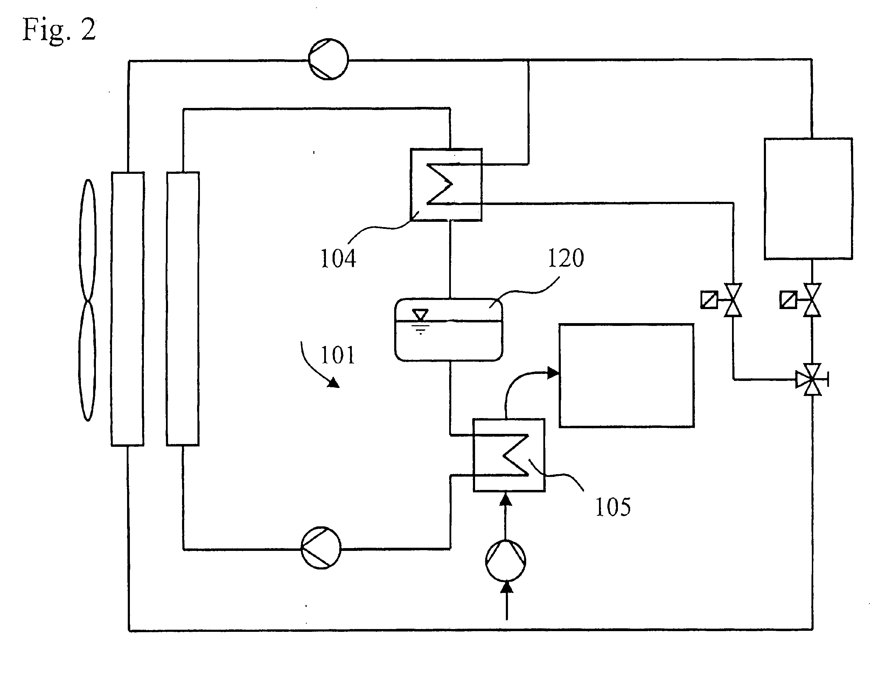

Das in Fig. 2 dargestellte zweite Ausführungsbeispiel stimmt im wesentlichen mit dem ersten Ausführungsbeispiel überein, so dass gleiche oder gleichwirkende Elemente mit um 100 höheren Bezugszeichen versehen sind.

Gemäß dem zweiten Ausführungsbeispiel ist - als einziger Unterschied zum ersten Ausführungsbeispiel - im Kühlmittelkreislauf 101 nach dem Kühlmittel/Kältemittel-Verdampfer 104 und vor dem Kühlmittel/Ladeluft-Kühler 105 ein Bevorratungsbehälter 120 vorgesehen, welcher zur Speicherung von kaltem Kühlmittel dient.

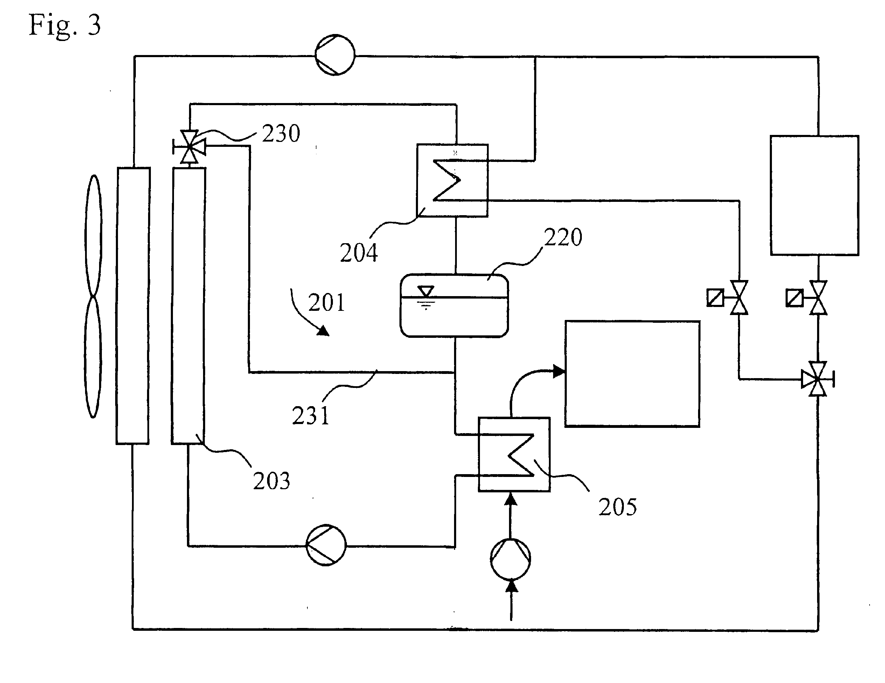

Das in Fig. 3 dargestellte dritte Ausführungsbeispiel stimmt ebenfalls im wesentlichen mit dem zweiten Ausführungsbeispiel überein, so dass gleiche oder gleichwirkende Elemente mit wiederum um 100 höheren Bezugszeichen versehen sind.

Gemäß dem dritten Ausführungsbeispiel ist im Kühlmittelkreislauf 201 nach dem Kühler 203 ein Ventil 230 vorgesehen, von dem aus ein Bypass 231 abzweigt, der parallel zum Kühlmittel/Kältemittel-Verdampfer 204 und zum Bevorratungsbehälter 220 verläuft und vor dem Kühlmittel/Ladeluft-Kühler 205 wieder mit der Hauptleitung 232 zusammengeführt wird. Dies ermöglicht eine Überbrückung des Kühlmittel/Kältemittel-Verdampfers 204, wenn - aufgrund der Temperaturverhältnisse, bspw. im Winter - eine zusätzliche Abkühlung des Kühlmittels nicht erforderlich ist, sondern vielmehr die Luftkühlung des Kühlmittels ausreicht, um die Ladeluft ausreichend abzukühlen. Hierbei sollen die Bezeichnungen Hauptleitung und Bypass lediglich andeuten, dass zwei, ggf. auch in Kombination mögliche Varianten möglich sind, jedoch keine Bevorzugung einer der beiden Varianten darstellen. Entsprechendes gilt auch für die folgenden Ausführungsbeispiele.

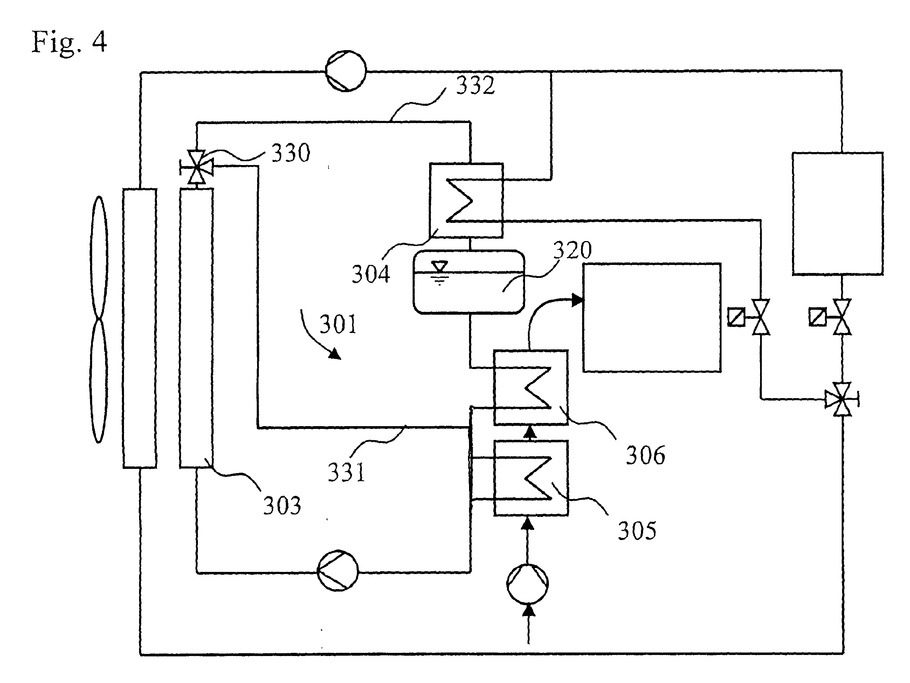

Das in Fig. 4 dargestellte vierte Ausführungsbeispiel stimmt im wesentlichen mit dem dritten Ausführungsbeispiel überein, so dass gleiche oder gleichwirkende Elemente mit wiederum um 100 höheren Bezugszeichen versehen sind.

Gemäß dem vierten Ausführungsbeispiel ist im Kühlmittelkreislauf 301 die Ladeluftkühlung zweistufig ausgeführt, nämlich mittels zweier Kühlmittel/Ladeluft-Kühler 305 und 306, wobei diese im folgenden entsprechend der Strömungsrichtung der Ladeluft als erster Kühlmittel/Ladeluft-Kühler 305 und zweiter Kühlmittel/Ladeluft-Kühler 306 bezeichnet werden. Bei diesem Ausführungsbeispiel ist nach dem Kühler 303 und dem Ventil 330, entsprechend dem dritten Ausführungsbeispiel, ein Bypass 331 vorgesehen, der parallel zum Kühlmittel/Kältemittel-Verdampfer 304, zum Bevorratungsbehälter 320, der auch entfallen kann, und zum zweiten Kühlmittel/Ladeluft-Kühler 306 verläuft und vor dem ersten Kühlmittel/Ladeluft-Kühler 305 wieder mit der Hauptleitung 332 zusammengeführt wird. Hierbei wird die Ladeluft zuerst im ersten Kühlmittel/Ladeluft-Kühler 305, welcher Aufgrund der Schaltung auf einem höheren Temperaturniveau arbeitet als der zweite Kühlmittel/Ladeluft-Kühler 306, und anschließend im zweiten Kühlmittel/Ladeluft-Kühler 306 abgekühlt. Dabei können die beiden Kühlmittel/Ladeluft-Kühler 305, 306 auch eine bauliche Einheit bilden, so dass der Kühlmittel/Ladeluft-Kühler fünf Anschlüsse hat. Idealerweise führt der erste Kühlmittel/Ladeluft-Kühler 305 eine Leistung ab, die 0 bis 40% der Gesamtleistung beträgt.

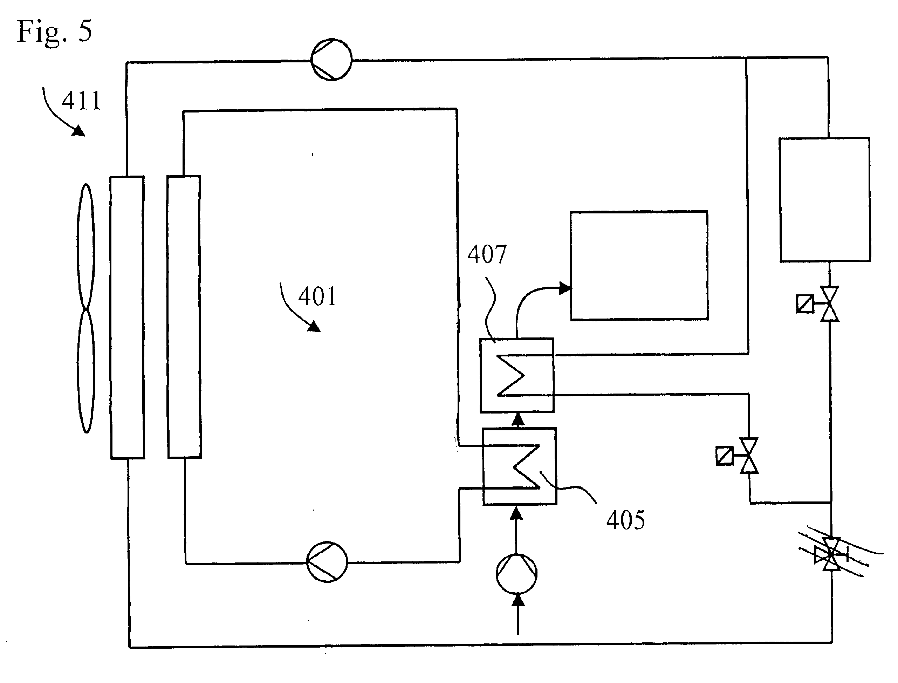

Das in Fig. 5 dargestellte, nicht erfindungsgemäße fünfte Ausführungsbeispiel stimmt im wesentlichen mit dem ersten Ausführungsbeispiel überein, so dass gleiche oder gleichwirkende Elemente mit um 400 höheren Bezugszeichen versehen sind.

Gemäß dem fünften Ausführungsbeispiel ist anstelle des erfindungsgemäßen Kühlmittel/Kältemittel-Verdampfers 4 im Kühlmittelkreislauf 401 ein LadeluftKühler/Kältemittel-Verdampfer 407 im Kältemittelkreislauf 411 vorgesehen. Hierbei wird die dem Motor zugeführte Ladeluft zuerst dem Kühlmittel/Ladeluft-Kühler 405 und anschließend dem Ladeluft-Kühler/Kältemittel-Verdampfer 407 zugeführt, d.h. die Ladeluft wird direkt durch die Verdampfung des Kältemittels abgekühlt.

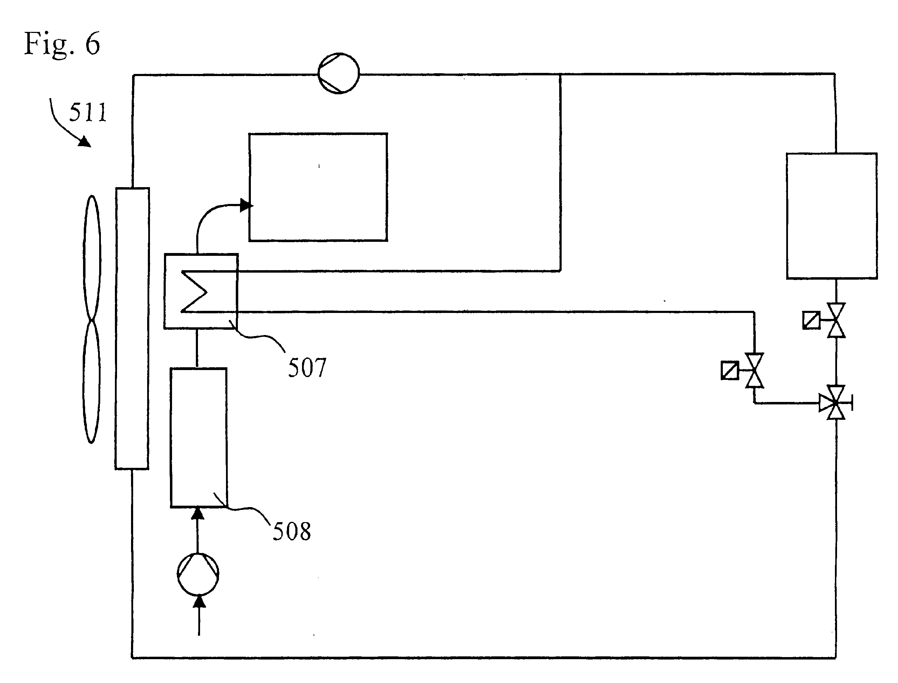

Das in Fig. 6 dargestellte, nicht erfindungsgemäße sechste Ausführungsbeispiel stimmt im wesentlichen mit dem fünften Ausführungsbeispiel überein, so dass gleiche oder gleichwirkende Elemente mit wiederum um 100 höheren Bezugszeichen versehen sind.

Gemäß diesem Ausführungsbeispiel ist neben dem Kältemittelkreislauf 511, der dem des fünften Ausführungsbeispiel entspricht, kein erfindungsgemäßer Kühlmittelkreislauf vorgesehen, vielmehr erfolgt eine erste Kühlung der Luft durch einen Ladeluft/Luft-Kühler 508. Die Ladeluft wird anschließend dem LadeluftKühler/Kältemittel-Verdampfer 507 zugeführt, d.h. die Ladeluft wird wiederum direkt durch die Verdampfung des Kältemittels abgekühlt.

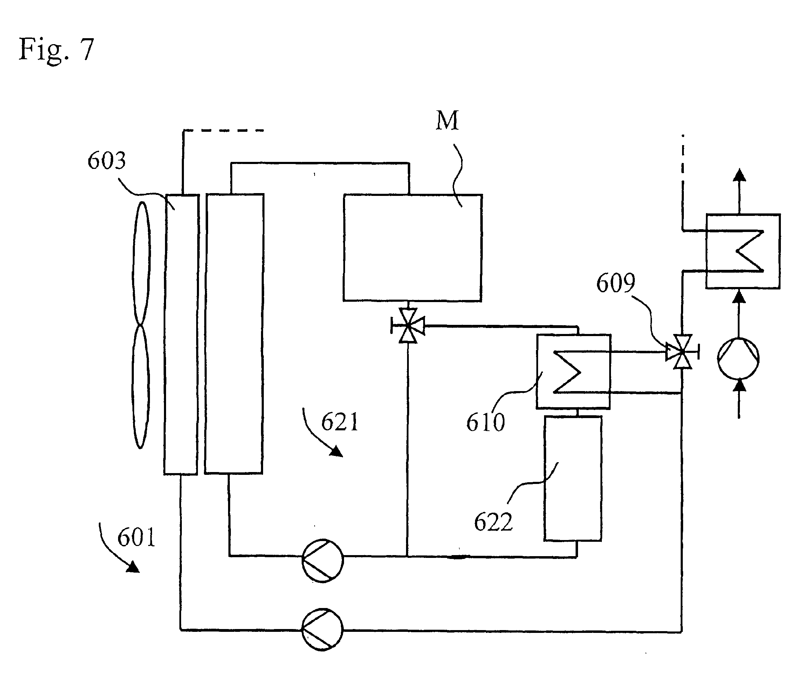

Das in Fig. 7 dargestellte, nicht erfindungsgemäße siebte Ausführungsbeispiel zeigt einen Ausschnitt eines Kühlmittelkreislaufs 601, wobei das Kühlmittel, gesteuert durch ein Ventil 609 bei Bedarf vor dem Abkühlen im Kühler 603 durch einen Wärmetauscher 610 geleitet, der vor einem Heizkörper 622 in einem Hauptkühlkreislauf 621 des Motors M angeordnet ist. Damit kann insbesondere bei Dieselmotoren das Kühlmittel, das im Winter durch den Heizkörper 622 gepumpt wird, weiter aufgewärmt werden und somit eine effektive Zuheizung ermöglicht werden, da gerade bei Dieselmotoren die Motorwärme zur Aufheizung des Fahrzeuginnenraumes im Winter oft nicht ausreicht.

Im Folgenden soll näher auf die konkrete Ausgestaltung der Wärmetauscher, insbesondere gemäß dem sechsten Ausführungsbeispiel, eingegangen werden.

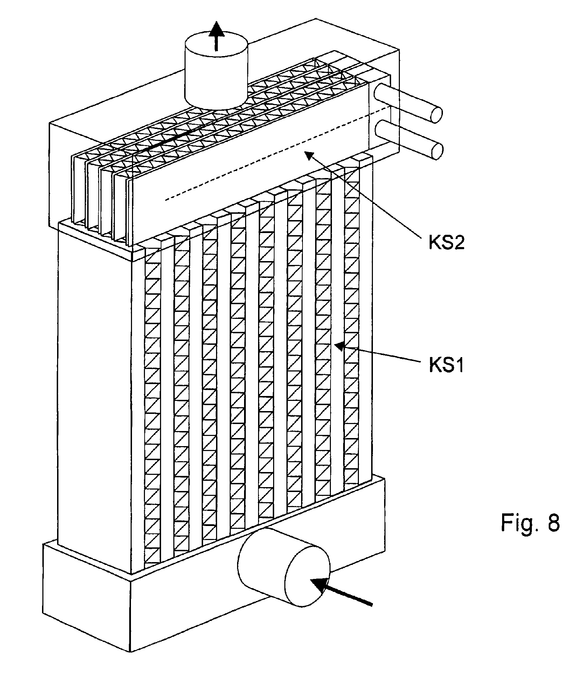

Gemäß einer ersten Ausführungsform, die in Fig. 8 dargestellt ist, werden die erste Kühlstufe KS1 der Ladeluftkühlung (d.h. vorzugsweise der Ladeluft/Luft-Kühler 508) und die zweite Kühlstufe KS2 der Ladeluftkühlung (d.h. vorzugsweise der Ladeluft-Kühler/Kältemittel-Verdampfer 507) in einem einzigen Bauteil integriert. Hierbei ist das Bauteil modular aufgebaut, wobei in einem ersten Teil im Wesentlichen die erste Kühlstufe KS1 und in einem zweiten Teil, welcher gleichzeitig auch ein Austrittskasten des ersten Teiles ist, die zweite Kühlstufe KS2 der Ladeluftkühlung integriert ist. Die Strömungsrichtung der Ladeluft ist durch Pfeile angedeutet. Auf Grund des modularen Aufbaus wird im Folgenden auf das Bauteil auch als Modul Bezug genommen. Hierbei weist das Modul erfindungsgemäß stets die zweite Kühlstufe KS2 auf.

Wie aus Fig. 8 ersichtlich ist, verlaufen sowohl die einzelnen Flachrohre als auch die Kühlrippenpakete der beiden Wärmetauscher der ersten und zweiten Kühlstufe KS1 und KS2 quer, d.h. vorliegend in einem rechten Winkel, zueinander, wobei der zweite Teil des Bauteils in Längsrichtung des ersten Bauteils angeordnet ist.

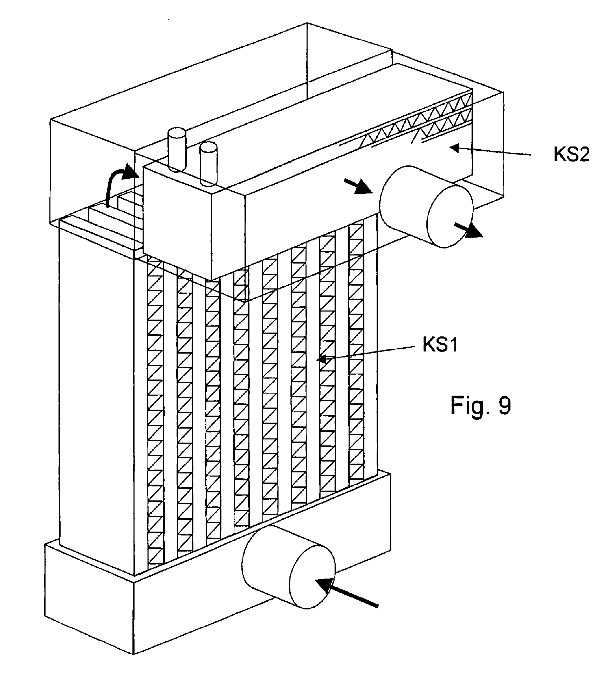

Fig. 9 zeigt eine zweite Ausführungsform, gemäß der die beiden Wärmetauscher, also die erste und die zweite Kühlstufe KS1 und KS2, aneinandergeflanscht sind, d.h. der kleinere, zweite Wärmetauscher (LadeluftKühler/Kältemittel-Verdampfer 507) ist in einem Endbereich des ersten Wärmetauschers (Ladeluft/Luft-Kühler 508) seitlich angebracht. Die Strömungsrichtung der Ladeluft ist wiederum durch Pfeile angedeutet. Auf Grund der seitlichen Anbringung der zweiten Kühlstufe KS2 erfolgt entsprechend der dargestellten Ausführungsform eine Richtungsumkehr der Ladeluftströmung.

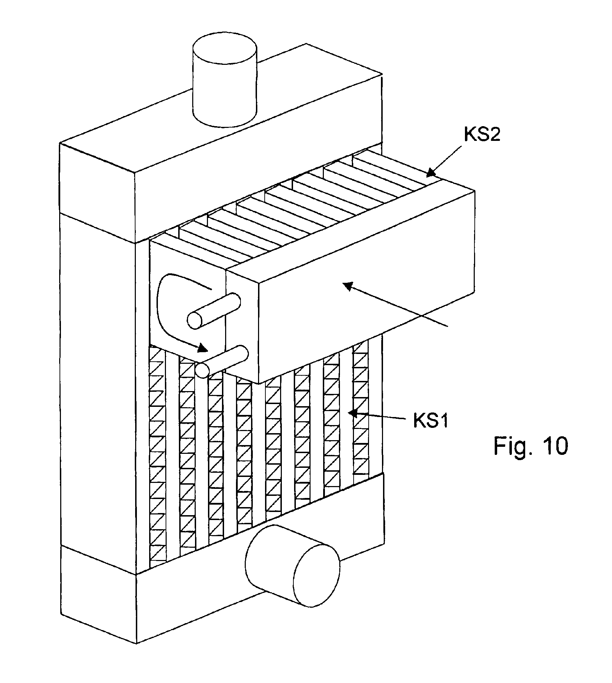

Gemäß einer in Fig. 10 dargestellten, dritten Ausführungsform durchdringen sich die beiden Wärmetauscher, d.h. die Flachrohre des zweiten Wärmetauschers (Ladeluft-Kühler/Kältemittel-Verdampfer 507) sind zwischen den Ladeluftrohren des ersten Wärmetauschers (Ladeluft/Luft-Kühler 508) angeordnet, wobei eine Verlötung zur besseren Fixierung vorgesehen sein kann. Dabei sind kürzere Rippen auf der Außenseite des ersten Wärmetauschers vorgesehen. Der gerade Pfeil deutet dabei die Zusammenbaurichtung an, der gebogene Pfeil die Strömungsrichtung des Kältemittels im zweiten Wärmetauscher.

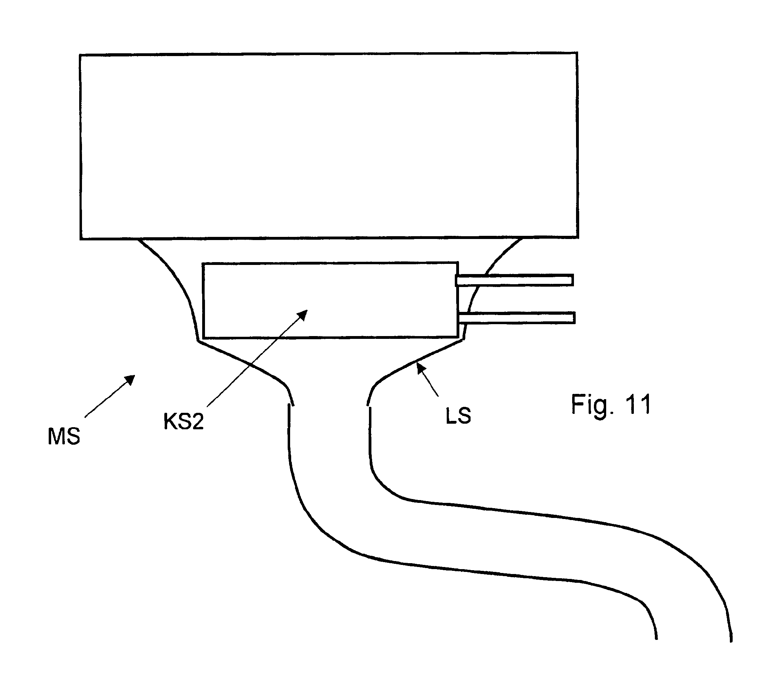

Wie in Fig. 11 dargestellt, ist gemäß einer vierten Ausführungsform eine direkte Integration in die Motoransaugung MS (Luftansaugstutzen LS) möglich, so dass ein erweitertes Ansaug-/Kühl-Modul, welches insbesondere die zweite Kühlstufe KS2 umfasst, direkt am Motor M vorgesehen ist. Dabei ist das Gehäuse des Ansaugmoduls so ausgebildet, dass der zweite Wärmetauscher (Ladeluft-Kühler/Kältemittel-Verdampfer 507) von einer Seite her in ein für die Drücke der Ladeluft ausreichend druckfestes Kunststoffgehäuse eingeschoben ist. Alternativ kann auch ein Gussgehäuse vorgesehen sein. Dabei ist der zweite Wärmetauscher und/oder das Gehäuse des Ansaugmoduls mit Dichtmitteln ausgestattet, die einen zur Umgebung hin druckdichten Abschluss des den Verdampfer aufnehmenden Hohlraums ermöglicht. Die Integration des Wärmetauschers in das Ansaugmodul lässt sich auch bei den in Fig. 1 bis Fig. 5 vorgesehenen kühlmittelgekühlten Wärmetauschern (5, 105, 205, 305, 306) umsetzen.

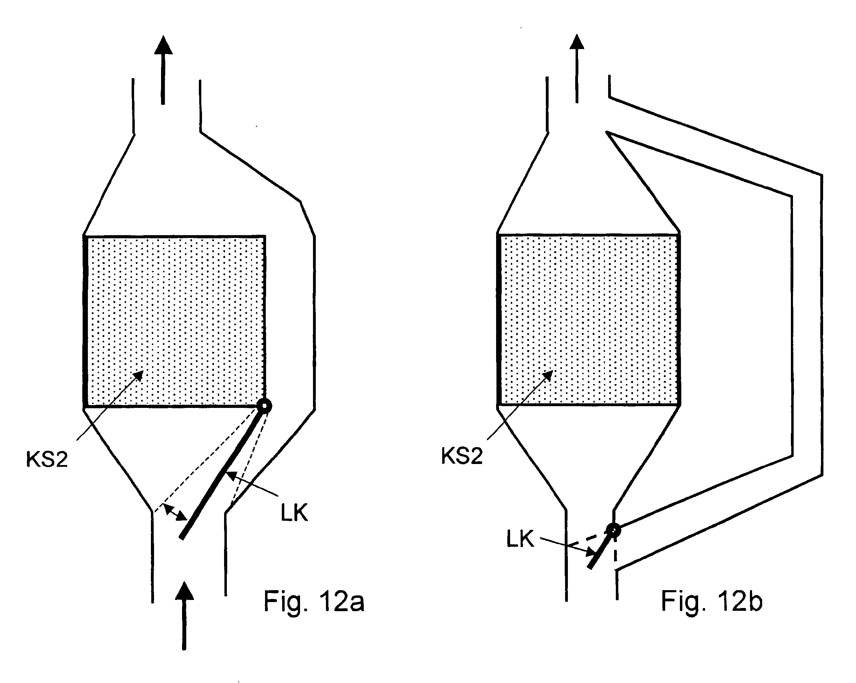

Die Regelung der Ladeluft-Temperatur an der Motor-Luftansaugung erfolgt mittels einer Bypass-Luftklappe LK und eines zugehörigen Bypass-Kanals, wobei der Sollwert für die Regelung von einem Motormanagement generiert wird. Gemäß einer ersten, in Fig. 12a dargestellten Ausführungsform ist der Bypass-Kanal direkt in das Gehäuse des zweiten Wärmetauschers integriert. Gemäß einer zweiten, alternativen Ausführungsform, die in Fig. 12b dargestellt ist, wird der Bypass-Kanal in Form einer extra ausgebildeten Leitung am Gehäuse des zweiten Wärmetauschers vorbeigeführt, wobei die Bypass-Luftklappe außerhalb des Gehäuses des zweiten Wärmetauschers angeordnet ist.

Die Regelung der Austrittstemperatur über eine Bypass-Luftklappe LK gemäß Fig. 12a bzw. Fig. 12b ist auch bei den in Fig. 1 bis Fig. 5 dargestellten Vorrichtungen denkbar, wenn nämlich am Wärmetauscher (5, 105, 205, 305, 306) luftseitig eine Bypass-Kanal vorgesehen ist und über eine Bypass-Luftklappe LK die Austrittstemperatur geregelt werden kann. Vorzugsweise befindet sich aber nur parallel zur letzten Ladeluftkühlstufe (306, 507, KS2) ein Bypass-Kanal mit zugehöriger Bypass-Luftklappe

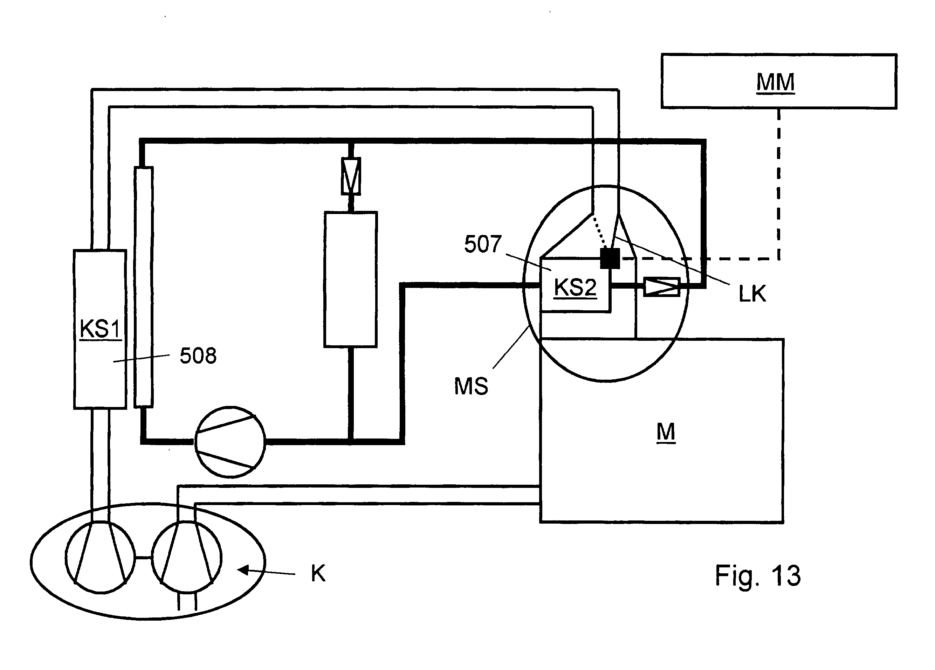

Fig. 13 zeigt im Prinzip den gleichen Kühlmittelkreislauf wie Fig. 6, so dass im Folgenden die gleichen Bezugszeichen verwendet werden.

Wie im rechten Teil der Figur 13 angedeutet, ist die Regelung der Ladeluft-Temperatur an der Motor-Luftansaugung mittels einer Bypass-Luftklappe LK entsprechend Fig. 12a ausgebildet, wobei die Bypass-Luftklappe LK kontinuierlich zwischen den beiden Endpositionen "alle Luft durch den Verdampfer" (Position durchgezogen dargestellt) und "alle Luft durch den Bypass-Kanal" (Position gestrichelt dargestellt) steuerbar ist. Die Bypass-Luftklappe LK befindet sich vorliegend am Verzweigungspunkt, kann aber auch am Zusammenführungspunkt angeordnet sein. Dabei sind die beiden Bypass-Luftklappen LK insbesondere kinematisch miteinander verbunden, so dass nur ein Verstellorgan zu deren Betätigung erforderlich ist. Die Regelung erfolgt über das zuvor genannte Motormanagement, vorliegend symbolisch durch MM angedeutet.

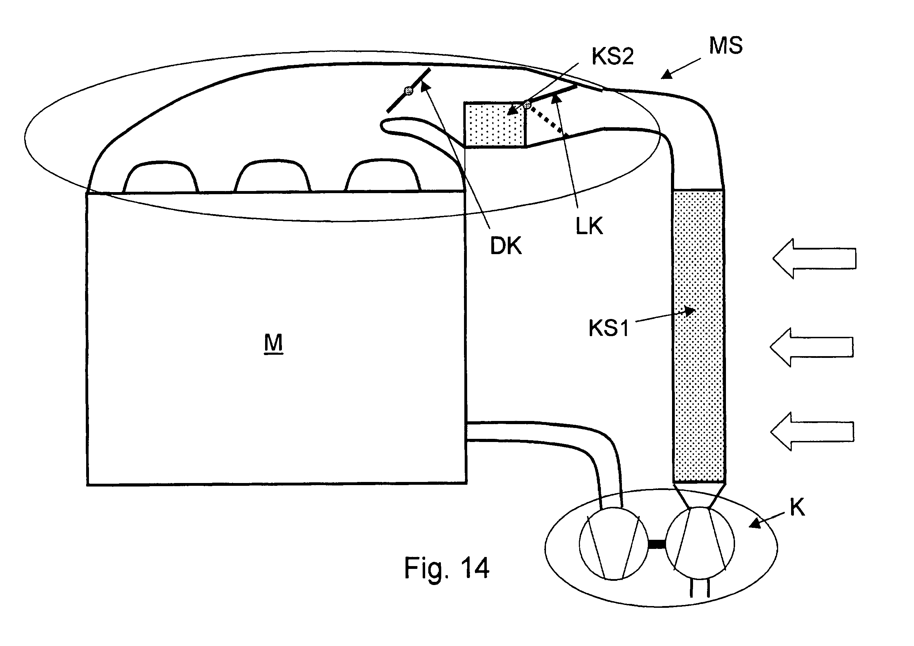

Hierbei bilden, wie in Fig. 14 dargestellt, der Ladeluft-Kühler/Kältemittel-Verdampfer 507 der zweiten Kühlstufe KS2, sein Gehäuse mit den angedeuteten Luftkanälen zu den Saugventilen der Zylinder, der Bypass-Kanal sowie die Bypass-Luftklappe LK mit dem Verstellorgan sowie eine Luft-Drosselklappe DK eine bauliche Einheit. Die Einheit umfasst ferner noch den konventionellen Ladeluft/Luft-Kühler 508 der ersten, luftbeaufschlagten Kühlstufe KS1.

Gemäß einer Variante können die Luftklappen zur Regelung der Ladeluft-Temperatur gleichzeitig die Drosselfunktion zur Leistungsregelung des Motors übernehmen, indem z.B. die beiden Luftströmungswege mit einer eigenen Drosselklappe versehen werden.

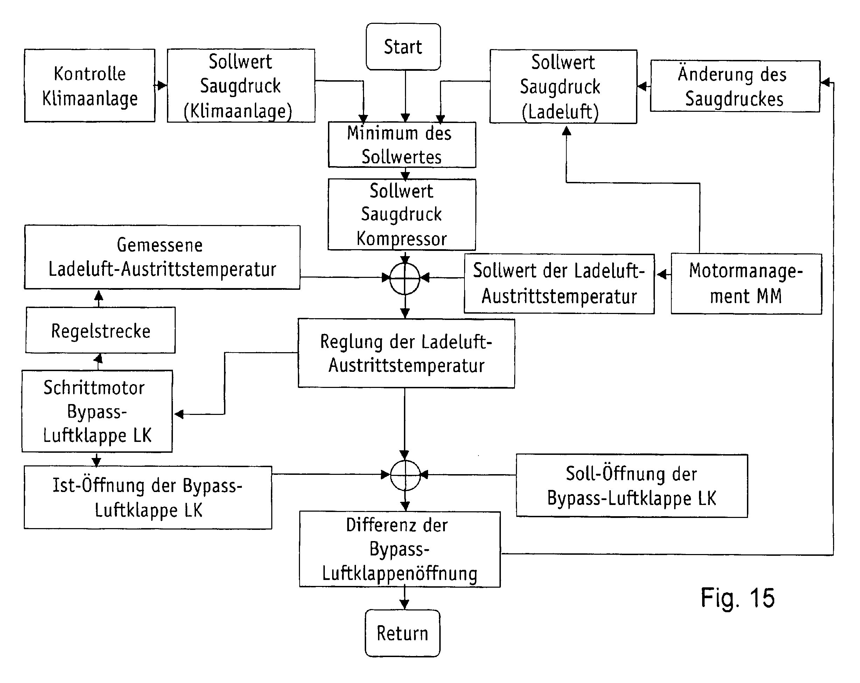

In Fig. 15 ist ein Flussdiagramm für die Regelung einer Bypass-Luftklappe LK der zweiten Kühlstufe KS2 und die Regelung des Saugdruckes eines extern angesteuerten und intern geregelten Kompressors K dargestellt.

Hierbei sieht das Regelungskonzept eine sehr schnelle Leistungssteigerung ("Booster") durch eine Verstellung der Bypass-Luftklappe KL vor, wenn das Motormanagement MM, beispielsweise bei einer Beschleunigung des Kraftfahrzeugs, eine deutlich niedrigere Ladeluft-Eintrittstemperatur anfordert. Die schnelle Leistungssteigerung kann nur erfolgen, wenn die zweite Kühlstufe KS2, d.h. der Verdampfer, stationär im Teillastbereich betrieben wird, da die Bypass-Luftklappe LK z.B. nur 30% geöffnet ist. Zur Leistungssteigerung kann dann nämlich sehr schnell das entsprechende Stellorgan, d.h. vorliegend die Bypass-Luftklappe LK, geöffnet werden, z.B. bis auf 90%, so dass sehr schnell eine größere Leistung zur Verfügung steht. Anschließend wird durch Vergleich der Ist-Öffnung (vorliegend 90%) mit der Soll-Öffnung (vorliegend 30%) der Saugdruck geändert, damit die Bypass-Luftklappe LK wieder in die Soll-Öffnungs-Position zurückgeführt werden kann. Dieser Vorgang dauert etwas länger als die Verstellung der Luftklappe LK. Beim Regelungskonzept ist, wie in Fig. 15 dargestellt, ferner der Zustand der Klimaanlage berücksichtigt.

Im Falle eines nur intern geregelten Kompressors gemäß einer Variante wird die Bypass-Luftklappe nur über einen Sollwert der Ladeluft-Austrittstemperatur geregelt.

### Bezugszeichenliste

1, 101, 201, 301, 401, 601 Kühlmittelkreislauf
2 Kühlmittel-Pumpe
3, 203, 303, 603 Kühler
4, 104, 204 Kühlmittel/Kältemittel Verdampfer
5, 105, 205, 305, 405 Kühlmittel/Ladeluft-Kühler
11,411,511 Kältemittelkreislauf
12 Kältemittel-Kompressor
13 Kondensator
14 Expansionsventil
15 Klima-Verdampfer
16 Bypass
17 zweites Expansionsventil
18 Ventil
120, 220, 320 Bevorratungsbehälter
230, 330 Ventil
231, 331 Bypass
232, 332 Hauptleitung
306 Kühlmittel/Ladeluft-Kühler
407 Ladeluft-Kühler/Kältemittel-Verdampfer
508 Ladeluft/Luft-Kühler
609 Ventil
610 Wärmetauscher
621 Hauptkühlkreislauf
622 Heizkörper

DK Luft-Drosselklappe
K Kompressor
KS1 erste Kühlstufe
KS2 zweite Kühlstufe
LK Bypass-Luftklappe
LS Luftansaugstutzen
M Motor
MM Motormanagement
MS Motoransaugung

## Patentansprüche

1. Vorrichtung zur Kühlung von Ladeluft bei einem Kraftfahrzeug mit einem Turbolader mit einer ersten Kühlstufe (KS1), wobei in der Vorrichtung mindestens eine zweite Kühlstufe (KS2) vorgesehen ist, wobei die Vorrichtung einen Kühlmittelkreislauf (1; 101; 201; 301; 401; 601) aufweist und der Kühlmittelkreislauf (1; 101; 201; 301; 401; 601) einen Verdampfer (4; 104; 204; 304; 610) aufweist, welcher Teil eines Kältemittelkreislaufs (11; 411) einer Klimaanlage ist, **dadurch gekennzeichnet ist, dass** der Verdampfer (4; 104; 204; 304) in einem Bypass (16) des Kältemittelsreislaufs (11) zum Bypassen eines Klimaverdampfers angeordnet ist.

2. Vorrichtung nach einem der vorhergehenden Ansprüche, **dadurch gekennzeichnet, dass** ein Kühler (5; 105; 205) nach dem Verdampfer (4; 104; 204) angeordnet ist.

3. Vorrichtung nach einem der vorhergehenden Ansprüche, **dadurch gekennzeichnet, dass** vor dem Verdampfer (4; 104; 204) ein Kühler (3; 203; 603) angeordnet ist.

4. Vorrichtung nach Anspruch 3, **dadurch gekennzeichnet, dass** der Kühler (3; 203; 603) luftgekühlt ist.

5. Vorrichtung nach einem der vorhergehenden Ansprüche, **dadurch gekennzeichnet, dass** der Bypass (16) ein thermostatisches oder regelbares Expansionsventil (17) oder eine sonstige Drosselstelle aufweist.

6. Vorrichtung nach einem der vorhergehenden Ansprüche, **dadurch gekennzeichnet, dass** im Kühlmittelkreislauf (101; 201; 301) ein Bevorratungsbehälter (120; 220; 320) angeordnet ist.

7. Vorrichtung nach einem der vorhergehenden Ansprüche, **dadurch gekennzeichnet, dass** im Kühlmittelkreislauf (201; 301) ein Bypass (231; 331) vorgesehen ist.

8. Vorrichtung nach einem der vorhergehenden Ansprüche, **dadurch gekennzeichnet, dass** zwei Kühler (305, 306; 405, 407; 508, 507) hintereinander angeordnet sind, welche die Ladeluft kühlen.

9. Vorrichtung nach Anspruch 8, **dadurch gekennzeichnet, dass** der zweite Kühlmittel/Ladeluft-Kühler (306) eine Leistung abgibt, die 0 bis 40% der Gesamtleistung beider Kühler (305, 306) entspricht.

10. Vorrichtung nach Anspruch 8 oder 9, **dadurch gekennzeichnet, dass** die beiden Kühler (305, 306) eine bauliche Einheit bilden.

11. Vorrichtung nach Anspruch 8, **dadurch gekennzeichnet, dass** ein Kühler (405) Teil eines Kühlmittelkreislaufs (401) und ein Kühler (507) Teil eines Kältemittelkreislaufs (411) ist.

12. Vorrichtung nach Anspruch 8, **dadurch gekennzeichnet, dass** ein Kühler (508) luftgekühlt ist.

13. Vorrichtung nach einem der vorhergehenden Ansprüche, **dadurch gekennzeichnet, dass** der Kühlmittelkreislauf (601) einen Wärmetauscher (610) durchströmt, der Teil eines Systems zur Kühlung eines Motors (M) ist.

14. Vonichtung nach Anspruch 13, **dadurch gekennzeichnet, dass** der Wärmetauscher (610) zur Beheizung des Fahrzeuginnenraumes dient.

15. Vorrichtung nach einem der vorhergehenden Ansprüche, **dadurch gekennzeichnet, dass** die erste und zweite Kühlstufe (KS1 und KS2) in einem Bauteil integriert ausgebildet sind.

16. Vorrichtung nach einem der vorhergehenden Ansprüche, **dadurch gekennzeichnet, dass** die zweite Kühlstufe (KS2) und die Motoransaugung (MS) in einem Bauteil als Ansaugmodul integriert ausgebildet sind.

17. Vorrichtung nach einem der vorhergehenden Ansprüche, **dadurch gekennzeichnet, dass** parallel zur zweite Kühlstufe (KS2) ein Bypass-Kanal vorgesehen ist.

18. Vorrichtung nach einem der vorhergehenden Ansprüche, **dadurch gekennzeichnet, dass** parallel zur letzten Ladeluftkühlstufe ein Luft-Bypass-Kanal vorgesehen ist.

19. Vorrichtung nach Anspruch 17 oder 18, **dadurch gekennzeichnet, dass** am Verzweigungspunkt und/oder am Zusammenführungspunkt eine Bypass-Luftklappe (LK) vorgesehen ist.

20. Vorrichtung nach Anspruch 18, **dadurch gekennzeichnet, dass** das Ansaugmodul ein Teil des Motors ist.

21. Verfahren zur Kühlung von Ladeluft mit einer Vorrichtung gemäß einem der Ansprüche 1 bis 20, **dadurch gekennzeichnet, dass** das Kühl- und/oder Kältemittels zweifach gekühlt wird.

22. Verfahren nach Anspruch 21, **dadurch gekennzeichnet, dass** das Kühlmittel von einem Kältemittel, das in einem Kältemittelkreislauf (11) strömt, gekühlt wird.

23. Verfahren nach Anspruch 22, **dadurch gekennzeichnet, dass** die Kühlung des Kühlmittels durch das Kältemittel unterbrochen werden kann.

24. Verfahren nach einem der Ansprüche 21 bis 23, **dadurch gekennzeichnet, dass** eine Regelung der Ladeluft-Austrittstemperatur mittels eines Verstellorgans in Verbindung mit einem Bypass-Kanal, der parallel zu einem oder zwei Wärmetauschern (KS1 bzw. KS2) vorgesehen ist, erfolgt.

25. Verfahren nach Anspruch 24, **dadurch gekennzeichnet, dass** nach einer Stellbewegung des Verstellorgans eine Anpassung des Saugdruckes des Kältekompressors erfolgt und anschließend eine zumindest teilweise Rückführung des Verstellorgans erfolgt.

## Claims

1. Apparatus for cooling charge air in a motor vehicle, comprising a turbocharger with a first cooling stage (KS1), wherein at least one second cooling stage (KS2) is provided in the apparatus, wherein the apparatus is provided with a coolant circuit (1; 101; 201; 301; 401; 601) and the coolant circuit (1; 101; 201; 301; 401; 601) comprises an evaporator (4; 104; 204; 304; 610) forming part of a refrigerant circuit (11; 411) of an air conditioning system, **characterised in that** the evaporator (4; 104; 204; 304) is located in a bypass (16) of the refrigerant circuit (11) for bypassing an air conditioning evaporator.

2. Apparatus according to any of the preceding claims, **characterised in that** a cooler (5; 105; 205) is provided downstream of the evaporator (4; 104; 204).

3. Apparatus according to any of the preceding claims, **characterised in that** a cooler (3; 203; 603) is provided upstream of the evaporator (4; 104; 204).

4. Apparatus according to claim 3, **characterised in that** the cooler (3; 203; 603) is air-cooled.

5. Apparatus according to any of the preceding claims, **characterised in that** the bypass (16) comprises a thermostatic or controllable expansion valve (17) or another restriction point.

6. Apparatus according to any of the preceding claims, **characterised in that** a supply tank (120; 220; 320) is provided in the coolant circuit (101; 201; 301).

7. Apparatus according to any of the preceding claims, **characterised in that** a bypass (231; 331) is provided in the coolant circuit (201; 301).

8. Apparatus according to any of the preceding claims, **characterised in that** two coolers (305, 306; 405, 407; 508, 507) for cooling the charge air are arranged one behind the other.

9. Apparatus according to claim 8, **characterised in that** the second coolant/charge air cooler (306) has an output corresponding to 0 to 40% of the total output of both coolers (305, 306).

10. Apparatus according to claim 8 or 9, **characterised in that** the two coolers (305, 306) form a structural unit.

11. Apparatus according to claim 8, **characterised in that** one cooler (405) is part of a coolant circuit (401) and one cooler (507) is part of a refrigerant circuit (411).

12. Apparatus according to claim 8, **characterised in that** one cooler (508) is air-cooled.

13. Apparatus according to any of the preceding claims, **characterised in that** the coolant circuit (601) passes through a heat exchanger (610) forming part of a system for cooling an engine (M).

14. Apparatus according to claim 13, **characterised in that** the heat exchanger (610) is used to heat the vehicle interior.

15. Apparatus according to any of the preceding claims, **characterised in that** the first and second cooling stages (KS1 and KS2) are integrated in one component.

16. Apparatus according to any of the preceding claims, **characterised in that** the second cooling stage (KS2) and the engine intake (MS) are integrated in one component to form an intake module.

17. Apparatus according to any of the preceding claims, **characterised in that** a bypass duct is provided parallel to the second cooling stage (KS2).

18. Apparatus according to any of the preceding claims, **characterised in that** an air bypass duct is provided parallel to the last charge air cooling stage.

19. Apparatus according to claim 17 or 18, **characterised in that** a bypass damper (LK) is provided at the branching point and/or at the junction point.

20. Apparatus according to claim 18, **characterised in that** the intake module is a part of the engine.

21. Method for cooling charge air using an apparatus according to any of claims 1 to 20, **characterised in that** the coolant and/or the refrigerant are/is cooled doubly.

22. Method according to claim 21, **characterised in that** the coolant is cooled by a refrigerant flowing in a refrigerant circuit (11).

23. Method according to claim 22, **characterised in that** the cooling of the coolant by the refrigerant can be interrupted.

24. Method according to any of claims 21 to 23, **characterised in that** the charge air outlet temperature is controlled by means of an adjusting element in combination with a bypass duct provided parallel to one or two heat exchangers (KS1 and/or KS2).

25. Method according to claim 24, **characterised in that** a control movement of the adjusting element is followed by an adjustment of the suction pressure of the compressor and then by an at least partial return of the control element.

## Revendications

1. Dispositif de refroidissement d'air de suralimentation concernant un véhicule automobile, comprenant un turbocompresseur comportant un premier niveau de refroidissement (KS1), où il est prévu, dans le dispositif, au moins un deuxième niveau de refroidissement (KS2), où le dispositif présente un circuit de liquide de refroidissement (1 ; 101 ; 201 ; 301 ; 401 ; 601), et le circuit de liquide de refroidissement (1 ; 101 ; 201 ; 301 ; 401 ; 601) présente un évaporateur (4 ; 104 ; 204 ; 304 ; 610) qui fait partie d'un circuit de fluide frigorigène (11 ; 411) d'un système de climatisation,
**caractérisé en ce que** l'évaporateur (4 ; 104 ; 204 ; 304) est disposé dans une dérivation (16) du circuit de fluide frigorigène (11), pour contourner un évaporateur de climatisation.

2. Dispositif selon la revendication 1, **caractérisé en ce qu'**un refroidisseur (5 ; 105 ; 205) est disposé en aval de l'évaporateur (4 ; 104 ; 204).

3. Dispositif selon l'une ou l'autre des revendications précédentes, **caractérisé en ce qu'**un refroidisseur (3 ; 203 ; 603) est disposé en amont de l'évaporateur (4 ; 104 ; 204).

4. Dispositif selon la revendication 3, **caractérisé en ce que** le refroidisseur (3 ; 203 ; 603) est à refroidissement à air.

5. Dispositif selon l'une quelconque des revendications précédentes, **caractérisé en ce que** la dérivation (16) présente un détendeur (17) thermostatique ou réglable ou un point d'étranglement quelconque.

6. Dispositif selon l'une quelconque des revendications précédentes, **caractérisé en ce qu'**un réservoir de stockage (120 ; 220 ; 320) est disposé dans le circuit de liquide de refroidissement (101 ; 201 ; 301).

7. Dispositif selon l'une quelconque des revendications précédentes, **caractérisé en ce qu'**il est prévu une dérivation (231 ; 331) dans le circuit de liquide de refroidissement (201 ; 301).

8. Dispositif selon l'une quelconque des revendications précédentes, **caractérisé en ce que** deux refroidisseurs (305, 306 ; 405, 407 ; 508, 507), qui refroidissent l'air de suralimentation, sont disposés l'un derrière l'autre.

9. Dispositif selon la revendication 8, **caractérisé en ce que** le deuxième refroidisseur (306) de liquide de refroidissement / d'air de suralimentation fournit une puissance qui correspond à une plage comprise entre 0 % et 40 % de la puissance totale des deux refroidisseurs (305, 306).

10. Dispositif selon la revendication 8 ou 9, **caractérisé en ce que** les deux refroidisseurs (305, 306) forment un ensemble structurel.

11. Dispositif selon la revendication 8, **caractérisé en ce qu'**un refroidisseur (405) fait partie d'un circuit de liquide de refroidissement (401), un refroidisseur (507) faisant partie d'un circuit de fluide frigorigène (411).

12. Dispositif selon la revendication 8, **caractérisé en ce qu'**un refroidisseur (508) est à refroidissement à air.

13. Dispositif selon l'une quelconque des revendications précédentes, **caractérisé en ce que** le circuit de liquide de refroidissement (601) traverse un échangeur de chaleur (610) qui fait partie d'un système de refroidissement d'un moteur (M).

14. Dispositif selon la revendication 13, **caractérisé en ce que** l'échangeur de chaleur (610) sert au chauffage de l'habitacle du véhicule.

15. Dispositif selon l'une quelconque des revendications précédentes, **caractérisé en ce que** le premier et le deuxième niveau de refroidissement (KS1 et KS2) sont configurés en étant intégrés dans un composant.

16. Dispositif selon l'une quelconque des revendications précédentes, **caractérisé en ce que** le deuxième niveau de refroidissement (KS2) et l'admission du moteur (MS) sont configurés en étant intégrés dans un composant servant de module d'admission.

17. Dispositif selon l'une quelconque des revendications précédentes, **caractérisé en ce qu'**il est prévu un conduit de dérivation parallèlement au deuxième niveau de refroidissement (KS2).

18. Dispositif selon l'une quelconque des revendications précédentes, **caractérisé en ce qu'**il est prévu un conduit de dérivation d'air parallèlement au dernier niveau de refroidissement d'air de suralimentation.

19. Dispositif selon la revendication 17 ou 18, **caractérisé en ce qu'**il est prévu un volet d'air de dérivation (LK) au niveau du point de bifurcation et / ou au niveau du point de convergence.

20. Dispositif selon la revendication 18, **caractérisé en ce que** le module d'admission fait partie du moteur.

21. Procédé de refroidissement d'air de suralimentation comprenant un dispositif conformément à l'une quelconque des revendications 1 à 20, **caractérisé en ce que** le liquide de refroidissement et / ou le fluide frigorigène est refroidi deux fois.

22. Procédé selon la revendication 21, **caractérisé en ce que** le liquide de refroidissement est refroidi par un fluide frigorigène qui s'écoule dans un circuit de fluide frigorigène (11).

23. Procédé selon la revendication 22, **caractérisé en ce que** le refroidissement du liquide de refroidissement peut être interrompu par le fluide frigorigène.

24. Procédé selon l'une quelconque des revendications 21 à 23, **caractérisé en ce qu'**une régulation de la température de sortie de l'air de suralimentation est réalisée au moyen d'un organe de réglage, en association avec un conduit de dérivation qui est prévu parallèlement à un ou deux échangeurs de chaleur (KS1 ou KS2).

25. Procédé selon la revendication 24, **caractérisé en ce qu'**il se produit une adaptation de la pression d'aspiration du compresseur frigorifique après un mouvement de réglage de l'organe de réglage, et il se produit ensuite une réaction au moins partielle de l'organe de réglage.
